# EUROPEAN PATENT APPLICATION

(11) **EP 4 818 835 A1**
(43) Date of publication of application: **07.10.2026**
(21) Application number: 26170820.0
(22) Date of filing: 07.04.2026
(51) Int. Cl.: G05B 23/02

(54) **METHOD AND SYSTEM FOR AIRCRAFT FAULT DIAGNOSIS AND MAINTENANCE RECOMMENDATION**

(30) Priority: 04.04.2025 US 202519170502
(71) Applicant: The Boeing Company, Arlington, VA 22202 (US)
(72) Inventor: LAKE, Peter J., ARLINGTON, 22202 (US); CHAPMAN, Steven David, ARLINGTON, 22202 (US); MCCULLOUGH, Jay Kevin, ARLINGTON, 22202 (US)
(74) Representative: Plasseraud IP

(57) **Abstract**

A computer-implemented method for aircraft fault diagnosis and maintenance recommendation includes receiving (850) fault reports associated with at least one fault message and receiving (852) maintenance action data associated with the fault message. The method includes determining (854) a fix effectiveness based on the maintenance action data and computing (856) a recommendation confidence for one or more recommendation actions based on the fix effectiveness. The method includes assigning (858) a concurrent fault (CF) factor to the fault message based on the number of other concurrent fault messages. The method includes computing (860) a service issue composite (SIC) factor for each of the recommendation actions using at least the recommendation confidence and the CF Factor and displaying (862) the recommendation actions and the SIC factors in a graphical user interface.

## Description

### BACKGROUND INFORMATION

### 1. Field:

The present disclosure relates generally to aircraft maintenance, and more specifically to a method and system for aircraft fault diagnosis and maintenance recommendation.

### 2. Background:

Aircraft fault diagnosis and maintenance are critical to ensuring operational efficiency, safety, and cost-effectiveness. Modern aircraft rely on diagnostic systems to detect and report faults. However, existing capabilities primarily focus on individual fault codes, providing maintenance personnel with recommended corrective actions based on a fix effectiveness metric. This metric assesses the success of past maintenance actions but does not fully account for cases where multiple fault codes occur concurrently.

Currently, diagnostic systems display multiple recommended actions when concurrent faults occur, requiring maintenance personnel to manually analyze and prioritize them. This approach does not integrate past repair data across multiple fault codes to determine the most effective corrective action. Also, this approach does not consider No Fault Found (NFF) shop data, which indicates whether a removed component was actually faulty or mistakenly replaced. Also, this approach lacks a systematic method for weighting corrective actions when historical data is incomplete or when past repairs have varying levels of confidence.

### SUMMARY

In an illustrative embodiment, a computer-implemented method for aircraft fault diagnosis and maintenance recommendation includes receiving fault reports associated with at least one fault message and receiving maintenance action data associated with the fault message. The method includes determining a fix effectiveness based on the maintenance action data and computing a recommendation confidence for one or more recommendation actions based on the fix effectiveness. The method includes assigning a concurrent fault (CF) factor to the fault message based on the number of other concurrent fault messages. The method includes computing a service issue composite (SIC) factor for each of the recommendation actions using at least the recommendation confidence and the CF Factor and displaying the recommendation actions and the SIC factors in a graphical user interface. The method includes providing the recommendation actions based on the SIC factors.

In an illustrative embodiment, the recommendation actions are ranked based on the SIC Factors, with higher SIC Factor values indicating more reliable corrective actions.

In an illustrative embodiment, the method includes computing the service issue composite (SIC) factor using a no fault found (NFF) factor, wherein the NFF factor is based on inspection results where no fault was found.

In an illustrative embodiment, the SIC factors are visually represented by bar graphs.

In an illustrative embodiment, the fix effectiveness is based on the number of times a specific maintenance action was performed and the percentage of successful fixes for each maintenance action.

In an illustrative embodiment, the recommendation confidence is based on the fix effectiveness, data confidence and an age factor weighted by a Gaussian distribution function.

In an illustrative embodiment, the SIC factor is represented by the equation:$SIC Factor = \left(Recommendation Confidence\right) \times \left(CF Factor\right) \times \left(1 - NFF%\right) ,$ when NFF factor is considered.

In an illustrative embodiment, a system for aircraft fault diagnosis and maintenance recommendation includes a storage device configured to store program instructions. The system includes one or more processors operably connected to the storage device and configured to execute the program instructions to cause the system to: receive fault reports associated with at least one fault message; receive maintenance action data associated with the fault message; determine a fix effectiveness based on the maintenance action data; compute a recommendation confidence for one or more recommendation actions based on the fix effectiveness; assign a concurrent fault (CF) factor to the fault message based on the number of other concurrent fault messages; compute a service issue composite (SIC) factor for each of the recommendation actions using at least the recommendation confidence and the CF Factor; and display the recommendation actions and the SIC factors in a graphical user interface.

In an illustrative embodiment, a computer program product for aircraft fault diagnosis and maintenance recommendation includes a computer-readable storage medium having program instructions embodied thereon to perform the steps of: receiving fault reports associated with at least one fault message; receiving maintenance action data associated with the fault message; determining a fix effectiveness based on the maintenance action data; computing a recommendation confidence for one or more recommendation actions based on the fix effectiveness; assigning a concurrent fault (CF) factor to the fault message based on the number of other concurrent fault messages; computing a service issue composite (SIC) factor for each of the recommendation actions using at least the recommendation confidence and the CF Factor; and displaying the recommendation actions and the SIC factors in a graphical user interface.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
FIG. 1 is a pictorial representation of a system in which illustrative embodiments may be implemented;
FIG. 2 is a functional block diagram of a system for aircraft fault diagnosis and maintenance recommendation;
FIG. 3 illustrates fault messages generated in response to fault detection in accordance with an illustrative embodiment;
FIGS. 4A, 4B and 4C illustrate reports generated in accordance with an illustrative embodiment;
FIG. 5 illustrates recommended actions in accordance with an illustrative embodiment;
FIGS. 6, 7 and 8A illustrate recommended actions including SIC Factors in accordance with an illustrative embodiment;
FIG. 8B illustrates a process flow diagram in accordance with an illustrative embodiment; and
FIG. 9 illustrates a block diagram of a data processing system in accordance with an illustrative embodiment.

### DETAILED DESCRIPTION

The illustrative embodiments address limitations of current aircraft maintenance protocols. The illustrative embodiments provide a method and system for fault diagnosis and maintenance recommendation that offers a solution when multiple fault codes are received concurrently and recommend corrective actions based on interactions between multiple faults. The method and system analyzes concurrent fault occurrences by integrating historical repair data, No Fault Found (NFF) shop data, and a confidence-weighted decision-making framework.

When multiple faults occur simultaneously, the method and system evaluates past maintenance records to determine the most effective corrective action by identifying patterns in prior successful repairs. It cross-references NFF data to minimize unnecessary component replacements, ensuring that removed parts were indeed faulty rather than mistakenly replaced. Furthermore, the method and system incorporates a systematic weighting mechanism that accounts for variations in historical repair confidence levels, providing maintenance personnel with a ranked list of recommended actions. By leveraging these advanced analytical capabilities, the method and system streamlines fault diagnosis, reduces maintenance costs, minimizes aircraft downtime, and enhances overall operational efficiency and safety.

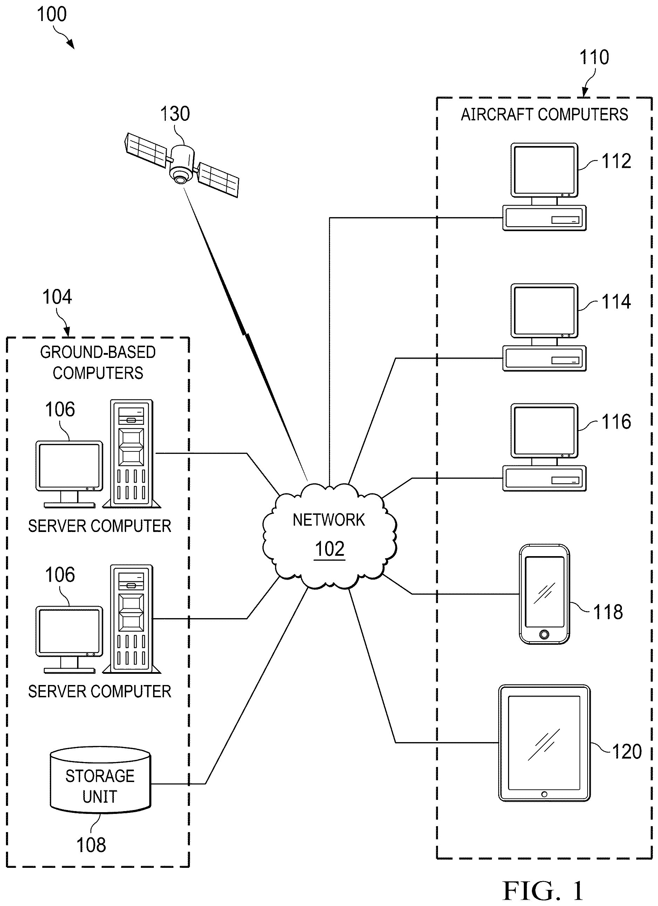

With reference to FIG. 1, a pictorial representation of system 100 is depicted in which illustrative embodiments may be implemented. System 100 is a network of computers in which the illustrative embodiments may be implemented.

System 100 includes ground-based computers 104 and aircraft-based computers 110. System 100 contains network 102, which is the medium used to provide communications links between ground-based computers 104 and aircraft-based computers 110. Network 102 may include connections, such as wire, wireless link, or fiber optic cables. Ground-based computers 104 and aircraft-based computers 110 may also rely on satellite communication link 130 in addition to network 102 for bidirectional communication.

Ground-based computers 104 may include server computers 106 and storage unit 108 which connect to network 102. In the depicted example, server computers 106 provide information, such as boot files, operating system images, and applications to aircraft-based computers 110.

Aircraft-based computers 110 can be, for example, computers, workstations, or network computers. As depicted, aircraft computers 110 include computers 112, 114, and 116. Aircraft-based computers 110 can also include other types of devices such as mobile phone 118 and tablet 120.

Program code located in system 100 can be stored on a computer-recordable storage medium and downloaded to a data processing system or other device for use. For example, the program code can be stored on a computer-recordable storage medium on server computers 106 and storage unit 108 and downloaded to aircraft-based computers 110 over network 102. Also, program code can be stored on a storage medium within aircraft-based computers 110.

In the illustrative example of FIG. 1, network 102 can include the Internet representing a worldwide collection of networks and gateways that use the Transmission Control Protocol/Internet Protocol (TCP/IP) suite of protocols to communicate with one another. System 100 also may be implemented using different types of networks. For example, network 102 can be comprised of an intranet, a local area network (LAN), a metropolitan area network (MAN), or a wide area network (WAN). FIG. 1 is intended as an example, and not as an architectural limitation for the different illustrative embodiments.

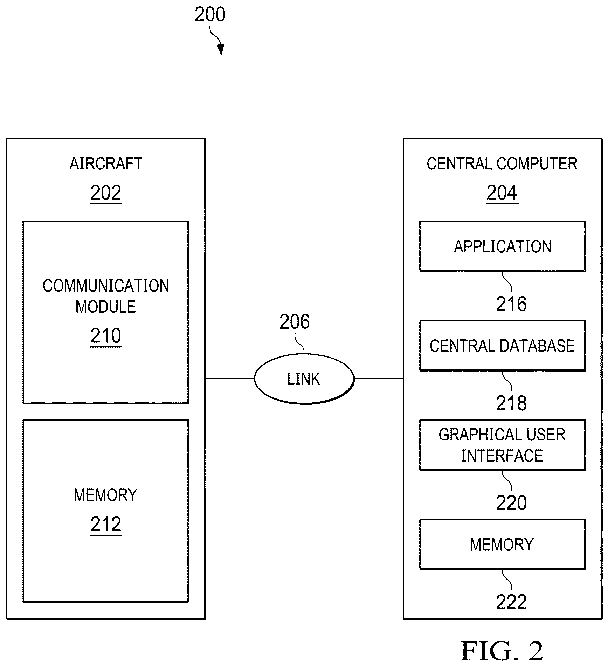

FIG. 2 is a functional block diagram of system 200 for aircraft fault diagnosis and maintenance recommendation. System 200 includes aircraft-based computer 202 configured to bidirectionally communicate with ground-based computer 204 (also referred to as a central computer) via communication link 206. Communication link 206 may include connections, such as wire, wireless link, satellite link and/or fiber optic cables.

When a fault occurs during in-flight, onboard sensors (not shown in FIG. 2) strategically embedded within an aircraft detect the fault. These onboard sensors may comprise a variety of advanced technologies. The sensors continuously monitor various systems and sub-systems of an aircraft. Upon detecting any fault, these sensors transmit real-time data to aircraft-based computer 202.

Aircraft-based computer 202 includes communication module 210 which establishes communication between aircraft-based computer 202 and ground-based (central) computer 204. Communication module 210 enables access to other components within aircraft-based computer 202 and ground-based computer 204. Communication module 210 transmits any detected faults, along with related data and information from onboard sensors, to ground-based computer 204.

Aircraft-based computer 202 includes memory 212 configured to store sensor outputs and data generated by computer 202. Memory 212 can be, for example, a hard disk drive, a solid-state drive, a RAM, a ROM, or a flash memory.

Ground-based computer 204 includes fault diagnosis and maintenance recommendation application 216 configured to analyze fault occurrences by integrating historical repair data, No Fault Found (NFF) shop data, and a confidence-weighted decision-making framework. When multiple faults occur simultaneously, application 216 evaluates past maintenance records to determine the most effective corrective action by identifying patterns in prior successful repairs. Application 216 cross-references NFF data to minimize unnecessary component replacements, ensuring that removed parts were indeed faulty rather than mistakenly replaced. Furthermore, application 216 incorporates a systematic weighting mechanism that accounts for variations in historical repair confidence levels, providing maintenance personnel with a ranked list of recommended actions. These recommendations are transmitted to ground-based maintenance personnel, enabling them to make informed decisions quickly and efficiently. By leveraging these advanced analytical capabilities, application 216 streamlines fault diagnosis, reduces maintenance costs, minimizes aircraft downtime, and enhances overall operational efficiency and safety.

Ground-based computer 204 includes central database 218, graphical user interface (GUI) 220 and memory 222 for efficient repair and maintenance operations. Central database 218 stores historical maintenance records, fault codes, past repair outcomes, and NFF data, enabling the system to analyze trends and determine the most effective corrective actions. GUI 220 provides maintenance personnel with an intuitive interface to view fault diagnostics, ranked repair recommendations, and relevant historical data, allowing for quick decision-making. Memory 22 stores temporary and long-term data, including real-time fault reports and updated maintenance records, ensuring seamless data retrieval and system performance.

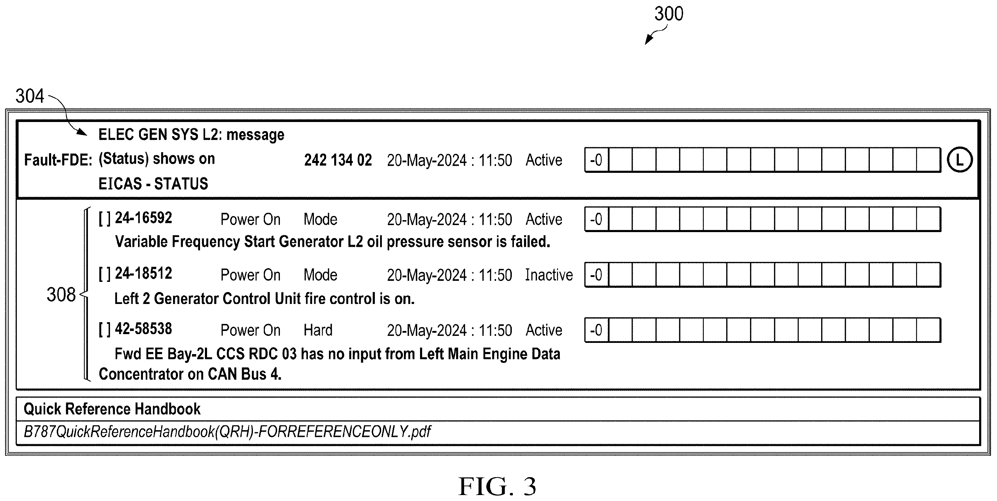

FIG. 3 illustrates fault message 300 generated in response to fault detection by onboard sensors, in accordance with an illustrative embodiment. In this example, fault message 300 is generated when one or more faults are detected within an onboard electrical generation system of an aircraft. Fault message 300 comprises brief fault message 304 and detailed fault messages 308.

Brief fault message 304 provides a high-level alert and includes system name, a fault code, date and time of the fault and other relevant information. Detailed fault messages 308 specify the affected sub-components of the system and includes sub-component name, a fault code, the date and time of the fault and other relevant information. In this example detailed fault messages 308, which were received concurrently, indicate that (1) the variable frequency start generator has failed, (2) the left generator control unit fire control is active, and (3) the forward electrical equipment (EE) bay is receiving no input from the left main engine data concentrator.

Brief fault message 304 is transmitted to aircraft computer 202 to notify the pilot that one or more faults have occurred. Meanwhile, detailed fault messages 308 are sent to ground-based computer 204, where application 216 analyzes the faults and provides recommended repair and replacement actions. In some embodiments, detailed fault messages 308 are not provided to the pilot.

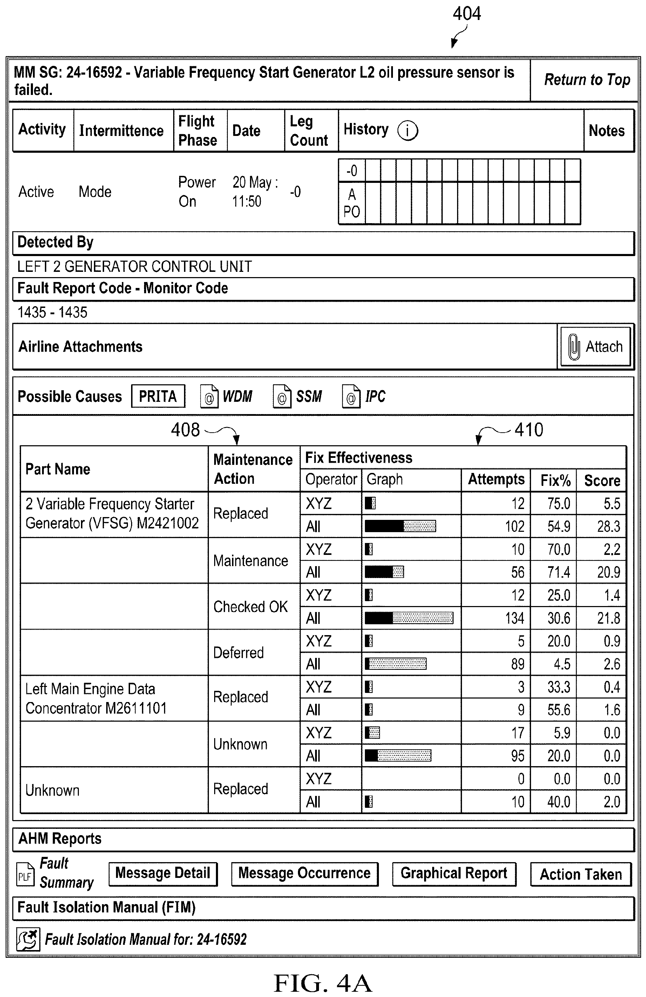

Based on historical repair and maintenance records of the sub-components, application 216 analyzes the detailed fault messages. It then generates a report that includes the fault messages and corresponding repair and maintenance history of the affected sub-components. FIG. 4A illustrates report 404 for a specific fault message: "The variable frequency start generator has failed."

In this example, report 404 is divided into two primary categories:
(1) Maintenance Actions 408 - actions performed in response to the fault message;
(2) Fix Effectiveness 410 - effectiveness of those maintenance actions in resolving the issue.

Within the Maintenance Actions 408 category, there are four subcategories:
(1) Replacement - the sub-component was replaced in response to the fault message;
(2) Maintenance - repair or servicing was performed on the sub-component;
(3) Checked OK - the sub-component was inspected, but no defect or fault was found;

Deferred - maintenance action was deferred in response to the fault message.

The Fix Effectiveness 410 category includes the following data:
(1) The total number of times a specific maintenance action was performed across all airline carriers, as well as the number of times it was performed by carrier XYZ airline;
(2) The Fix%, which represents the percentage of successful fixes for each maintenance action;
(3) A corresponding effectiveness score for each maintenance action.

For example, report 404 shows that this sub-component was replaced 102 times across all airlines, including 12 replacements by XYZ airline. The Fix% for replacement was 75% for XYZ airline and 54.9% across all airlines, with an assigned fix effectiveness score for both AAL and all carriers.

Also, report 404 shows that maintenance was performed 56 times across all carriers and 10 times by XYZ airline, with a Fix% of 70% for XYZ and 71.4% across all carriers. Similar data is also provided for instances where the sub-component was inspected but found to be in working condition (Checked OK) and when maintenance action was deferred.

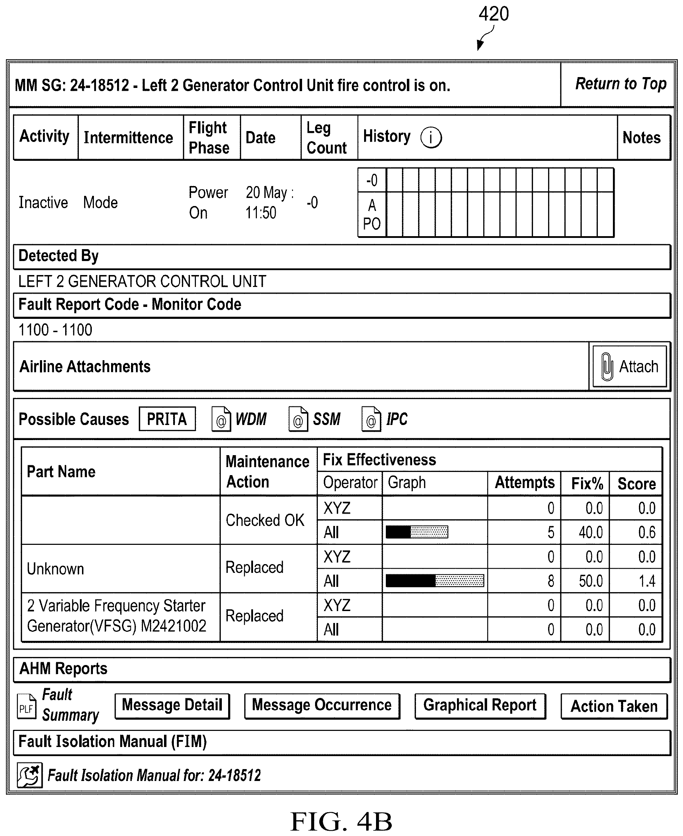

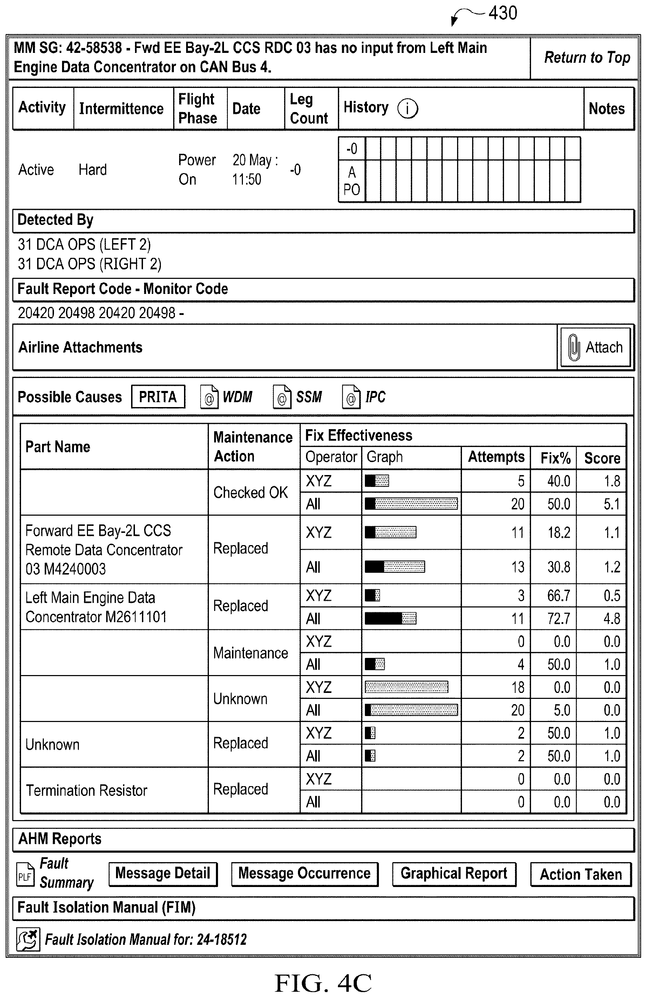

FIG. 4B illustrates report 420 for the fault message "the left generator control unit fire control is active", and FIG. 4C illustrates report 430 for the fault message "the forward electrical equipment (EE) bay is receiving no input from the left main engine data concentrator." Reports 420 and 430 show similar data for the primary categories and subcategories as shown in report 404.

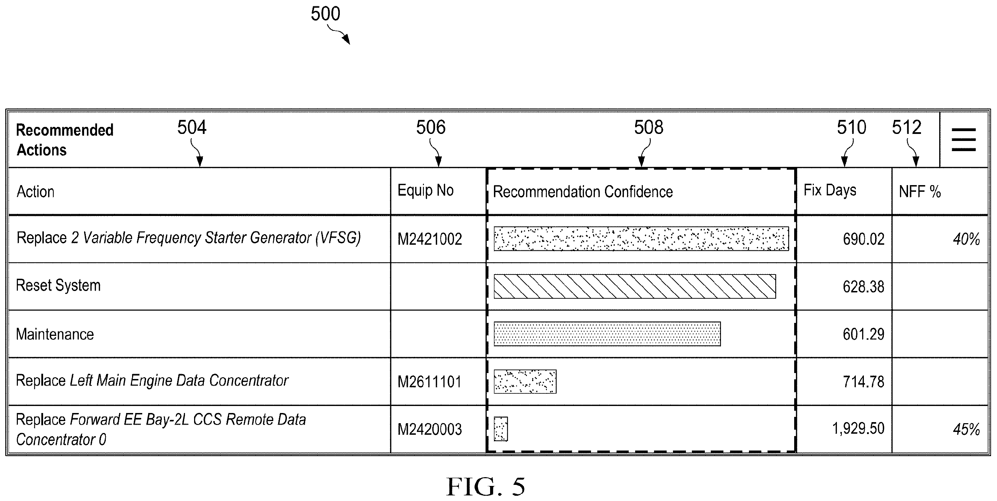

In an illustrative embodiment, application 216 computes Recommended Actions based on reports 404, 408, and 408. FIG. 5 illustrates Recommended Actions 500 in accordance with an illustrative embodiment. Recommended Actions 500 include Actions 504, along with their corresponding Equipment Number 506, Recommendation Confidence 508, Fix Days 510, and No Fault Found (NFF) % 512.

Each Action 504 is associated with a Recommendation Confidence, which indicates the level of certainty that the action had successfully resolved the issue (e.g., fix the fault) based on historical data. In this example, Recommendation Confidence 508 is visually represented using bar graphs. The length of each bar corresponds to the confidence level - the longer the bar, the higher the confidence in the recommendation. In other words, Recommendation Confidence indicates the level of certainty that the application is able to pick out the corrective action based on historical data.

Additionally, each action is linked to Fix Days 510, indicating the average number of days this particular fault did not reoccur after the action was taken.

In this example, the action "Replace Variable Frequency Stator Generator" has the highest Recommendation Confidence, with Fix Days of 690 and an NFF rate of 40%. This suggests that if this action is taken, there is a high level of confidence that the fault will be resolved, and the issue will not reoccur for 690 days.

Similarly, the action "Reset System" has the second-highest Recommendation Confidence, with Fix Days of 628. No NFF data is available for this action. This indicates that implementing this action has a high probability of fixing the fault, and the issue is expected to remain resolved for 628 days.

In one embodiment, the Recommendation Confidence 508 is computed based on several factors:
(1) Fix Effectiveness: The application evaluates past history of fixes and their effectiveness. If prior repairs have consistently resolved issues, the confidence in recommending similar actions increases.
(2) Number of Replacements (Removals) of Sub-Components: The application tracks how often sub-components have been replaced or removed. A higher number of replacements/removals may indicate a lower reliability of the component, reducing confidence in its continued use.
(3) Data Confidence: The application considers the accuracy and reliability of the fault codes and data entered by a user. Higher data confidence means the fault codes and text can be accurately interpreted by the application, leading to higher recommendation confidence.
(4) Age Factor Weighted by a Gaussian Distribution Function: The application applies a Gaussian (normal) distribution to model the effect of age of previous data. For example, very old data may receive a low confidence score.

In an illustrative embodiment, based on the Recommendation Confidence and a Concurrent Fault (CF) Factor, application 216 computes a Service Issue Composite (SIC) Factor. In one embodiment, SIC Factor is represented by the equation below:$SIC Factor = \left(Recommendation Confidence\right) \times \left(CF Factor\right) .$

In some example embodiments, if a fault message "A" is received concurrently with two other fault messages, the fault message "A" is assigned a CF Factor = 3. If the fault message "A" is received concurrently with one other fault message, the fault message "A" is assigned a CF Factor = 2, and if the fault message "A" is not received concurrently with any other fault message, the fault message "A" is assigned a CF Factor = 1. As an example, with reference to FIG. 3, the fault message: "The variable frequency start generator has failed" is received concurrently with two other fault messages, and thus the fault message: "The variable frequency start generator has failed" is assigned a CF Factor = 3.

In other example embodiments, SIC Factor is computed by taking into consideration No Fault Found (NFF) percentage rate. The NFF percentage rate is an indicator of corrective action efficacy. For example, a high NFF percentage rate implies that the component is not the root cause of the problem. In the example of FIG. 5, the Variable Frequency Starter Generator has an associated NFF percentage rate of 40% which indicates that the Variable Frequency Starter Generator passes acceptance testing when it is sent to the shop 40% of the time.

When the NFF percentage rate is taken into account, SIC Factor is represented by the following equation:
$SIC Factor = \left(Recommendation Confidence\right) \times \left(CF Factor\right) \times \left(1-NFF%\right)$

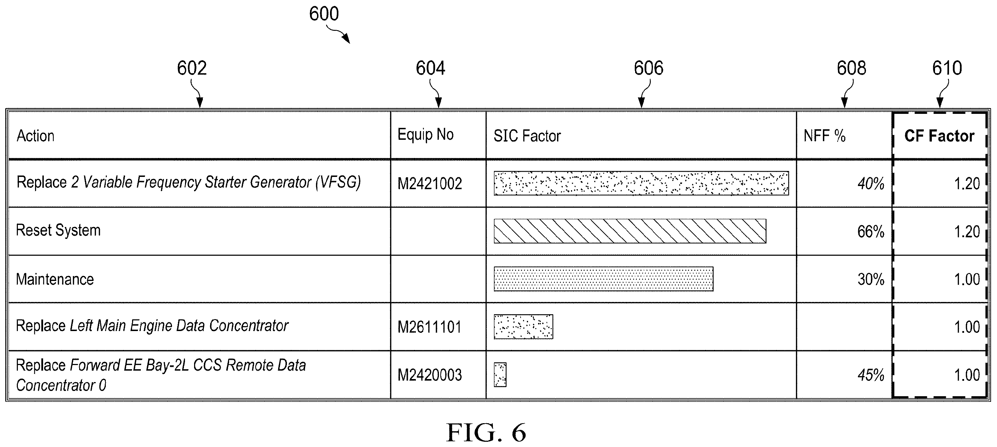

FIG. 6 illustrates report 600 generated by application 216 in accordance with an illustrative embodiment. Report 600 shows Action 602 and corresponding equipment number 604, SIC Factor 606, NFF% 608 and CF Factor 610. In this example, CF Factor 608 represents the average CF Factor for the equipment based on data received from multiple carrier airlines.

Each Action 602 is associated with SIC Factor 606, which indicates the level of certainty that the action will successfully resolve the issue (e.g., fix the fault). In this example, SIC Factor 606 is visually represented using bar graphs. The length of each bar corresponds to the confidence level - the longer the bar, the higher the confidence in the recommendation.

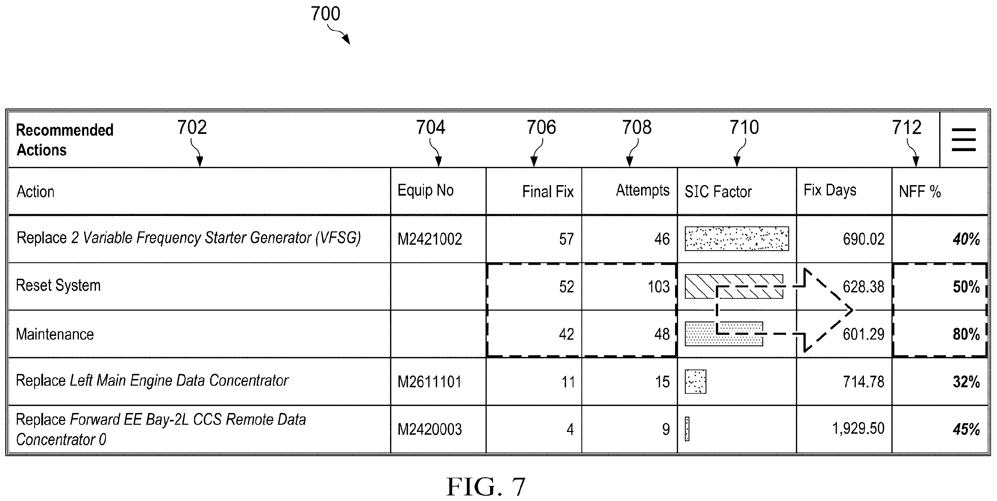

In some cases, systems and components may not have associated shop data, and thus NFF percentage rate may not be available. In such cases, NFF percentage rate is calculated by the ratio (Final Fix Number)/(Attempt Number). FIG. 7 illustrates report 700 which includes Action 702 and corresponding equipment number 704, Final Fix Number 706, Attempt Number 708, SIC Factor 710 and NFF% rate 712. In this example, NFF% rate 712 was not available for Actions "Reset System" and "Maintenance." Accordingly, NFF% rates were computed using the ratio Final Fix Number)/(Attempt Number). As shown in FIG. 7, NFF% = 50% was assigned for Action "Reset System", and NFF% = 80% was assigned for Action "Maintenance."

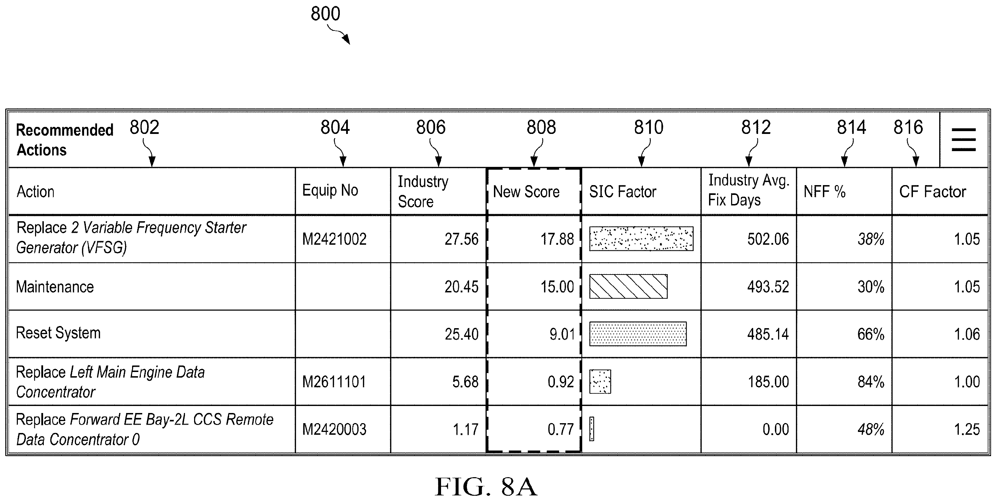

In an illustrative embodiment shown in FIG. 8A, application 216 generates report 800 which includes Action 802 and corresponding equipment number 804, industry score 806, new score 808, SIC Factor 810, Average Fix Days 812, NFF% 814 and CF Factor 816. In this example, industry score 806 is computed using prior methodologies while new score is computed based on methodologies described in the disclosed embodiments. For example, the new score for the Action Replace Variable Frequency Generator is assigned a score 17.88 compared to the industry score 27.66. The new score is based on the SIC Factor which incorporates CF Factor and NFF Factor.

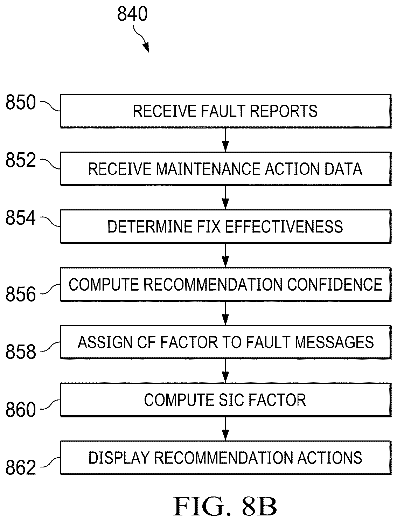

FIG. 8B is a flow diagram of process 840 in accordance with an illustrative embodiment. In block 850, fault reports associated with at least one fault message is received. In block 852, maintenance action data associated with the fault message is received. In block 854, a fix effectiveness based on the maintenance action data is determined. In block 856, a recommendation confidence for one or more recommendation actions based on the fix effectiveness is computed. In block 858, a concurrent fault (CF) factor is assigned to the fault message based on the number of other concurrent fault messages. In block 860, a service issue composite (SIC) factor is computed for each of the recommendation actions using at least the recommendation confidence and the CF Factor. In block 864, the recommendation actions and the SIC factors are displayed in a graphical user interface. The recommendation actions based on the SIC factors are provided to maintenance personnel.

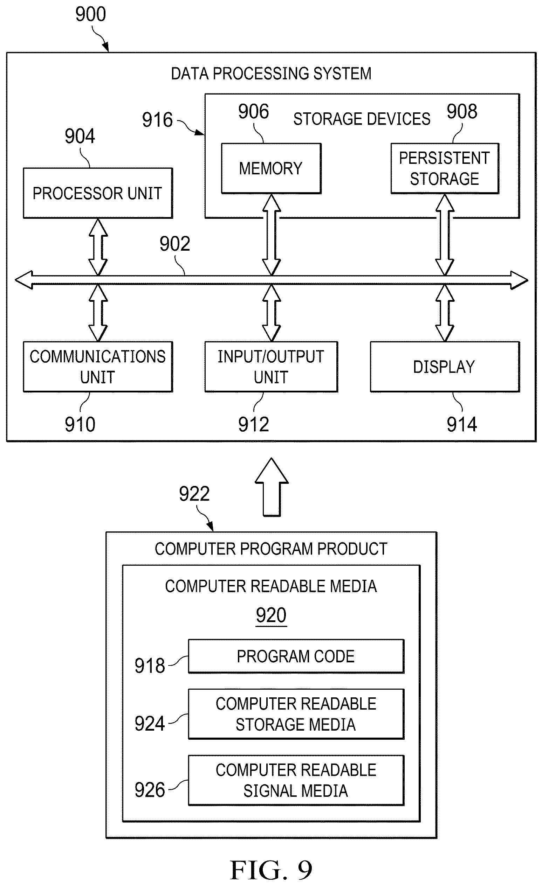

Turning now to FIG. 9, an illustration of a block diagram of a data processing system is depicted in accordance with an illustrative embodiment. Data processing system 900 may be used to implement aircraft-based computers 110, 202 and ground-based computers 104, 204. In this illustrative example, data processing system 900 includes communications framework 902, which provides communications between processor unit 904, memory 906, persistent storage 908, communications unit 910, input/output unit 912, and display 914. In this example, communications framework 902 may take the form of a bus system.

Processor unit 904 serves to execute instructions for software that may be loaded into memory 906. Processor unit 904 may be a number of processors, a multiprocessor core, or some other type of processor, depending on the particular implementation. In an embodiment, processor unit 904 comprises one or more conventional general-purpose central processing units (CPUs). In an alternate embodiment, processor unit 904 comprises one or more graphical processing units (GPUs).

Memory 906 and persistent storage 908 are examples of storage devices 916. A storage device is any piece of hardware that is capable of storing information, such as, for example, without limitation, at least one of data, program code in functional form, or other suitable information either on a temporary basis, a permanent basis, or both on a temporary basis and a permanent basis. Storage devices 916 may also be referred to as computer-readable storage devices in these illustrative examples. Memory 906, in these examples, may be, for example, a random access memory or any other suitable volatile or non-volatile storage device. Persistent storage 908 may take various forms, depending on the particular implementation.

For example, persistent storage 908 may contain one or more components or devices. For example, persistent storage 908 may be a hard drive, a flash memory, a rewritable optical disk, a rewritable magnetic tape, or some combination of the above. The media used by persistent storage 908 also may be removable. For example, a removable hard drive may be used for persistent storage 908. Communications unit 910, in these illustrative examples, provides for communications with other data processing systems or devices. In these illustrative examples, communications unit 910 is a network interface card.

Input/output unit 912 allows for input and output of data with other devices that may be connected to data processing system 900. For example, input/output unit 912 may provide a connection for user input through at least one of a keyboard, a mouse, or some other suitable input device. Further, input/output unit 912 may send output to a printer. Display 914 provides a mechanism to display information to a user.

Instructions for at least one of the operating system, applications, or programs may be located in storage devices 916, which are in communication with processor unit 904 through communications framework 902. The processes of the different embodiments may be performed by processor unit 904 using computer-implemented instructions, which may be located in a memory, such as memory 906. These instructions are referred to as program code, computer-usable program code, or computer-readable program code that may be read and executed by a processor in processor unit 904. The program code in the different embodiments may be embodied on different physical or computer-readable storage media, such as memory 906 or persistent storage 908.

Program code 918 is located in a functional form on computer-readable media 920 that is selectively removable and may be loaded onto or transferred to data processing system 900 for execution by processor unit 904. Program code 918 and computer-readable media 920 form computer program product 922 in these illustrative examples. In one example, computer-readable media 920 may be computer-readable storage media 924 or computer-readable signal media 926.

In these illustrative examples, computer-readable storage media 924 is a physical or tangible storage device used to store program code 918 rather than a medium that propagates or transmits program code 918. Computer readable storage media 924, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se*, such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code 918 may be transferred to data processing system 900 using computer-readable signal media 926. Computer-readable signal media 626 may be, for example, a propagated data signal containing program code 918.

The different components illustrated for data processing system 900 are not meant to provide architectural limitations to the manner in which different embodiments may be implemented. The different illustrative embodiments may be implemented in a data processing system including components in addition to or in place of those illustrated for data processing system 900. Other components shown in FIG. 9 can be varied from the illustrative examples shown. The different embodiments may be implemented using any hardware device or system capable of running program code 918.

As used herein, "a number of," when used with reference to items, means one or more items. For example, "a number of different types of networks" is one or more different types of networks.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

The different illustrative examples describe components that perform actions or operations. In an illustrative embodiment, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. Further, different illustrative embodiments may provide different features as compared to other illustrative embodiments. The embodiments selected are chosen and described in order to best explain the principles of the embodiments, the practical application, and to enable others of ordinary skill in the art to understand the disclosure for various embodiments with various modifications as are suited to the particular use contemplated.

Also provided are the following illustrative, non-exhaustive examples of the subject-matter encompassed herein, which relate to:
A computer-implemented method for aircraft fault diagnosis and maintenance recommendation, comprising: receiving fault reports associated with at least one fault message; receiving maintenance action data associated with the fault message; determining a fix effectiveness based on the maintenance action data; computing a recommendation confidence for one or more recommendation actions based on the fix effectiveness; assigning a concurrent fault (CF) factor to the fault message based on the number of other concurrent fault messages; computing a service issue composite (SIC) factor for each of the recommendation actions using at least the recommendation confidence and the CF Factor; displaying the recommendation actions and the SIC factors in a graphical user interface; and providing the recommendation actions based on the SIC factors.

The computer-implemented method described in the immediately preceding paragraph, wherein the recommended actions are ranked based on the SIC Factors, with higher SIC Factor values indicating more reliable corrective actions.

The computer-implemented method described in the first of the two immediately preceding paragraphs, further comprising computing the service issue composite (SIC) factor using a no fault found (NFF) factor, wherein the NFF factor is based on inspection results where no fault was found.

The computer-implemented method described in the first of the three immediately preceding paragraphs, wherein each recommendation action is associated with an equipment number, recommendation confidence and fix days.

The computer-implemented method described in the first of the four immediately preceding paragraphs, wherein the SIC factors are visually represented by bar graphs.

The computer-implemented method described in the first of the five immediately preceding paragraphs, wherein the recommendation confidence is visually represented by bar graphs.

The computer-implemented method described in the first of the six immediately preceding paragraphs, wherein the fix effectiveness is based on the number of times a specific maintenance action was performed and the percentage of successful fixes for each maintenance action.

The computer-implemented method described in the first of the seven immediately preceding paragraphs, wherein the recommendation confidence is based on the fix effectiveness, data confidence and an age factor weighted by a Gaussian distribution function.

The computer-implemented method described in the first of the eight immediately preceding paragraphs, wherein the SIC factor is represented by the equation: SIC Factor = (Recommendation Confidence) × (CF Factor) × (1 - NFF%), when NFF factor is considered.

The computer-implemented method described in the first of the nine immediately preceding paragraphs, wherein the CF Factor is assigned based on the number of concurrent fault messages received with a given fault message.

A system for aircraft fault diagnosis and maintenance recommendation, comprising: a storage device configured to store program instructions; and one or more processors operably connected to the storage device and configured to execute the program instructions to cause the system to: receive fault reports associated with at least one fault message; receive maintenance action data associated with the fault message; determine a fix effectiveness based on the maintenance action data; compute a recommendation confidence for one or more recommendation actions based on the fix effectiveness; assign a concurrent fault (CF) factor to the fault message based on the number of other concurrent fault messages; compute a service issue composite (SIC) factor for each of the recommendation actions using at least the recommendation confidence and the CF factor; display the recommendation actions and the SIC factors in a graphical user interface; and provide the recommendation actions based on the SIC factors.

The system described in the immediately preceding paragraph, wherein the recommended Actions are ranked based on the SIC Factors, with higher SIC Factor values indicating more reliable corrective actions.

The system described in the first of the two immediately preceding paragraphs, wherein the program instructions cause the system to compute the service issue composite (SIC) factor using a no fault found (NFF) factor, wherein the NFF factor is based on inspection results where no fault was found.

The system described in the first of the three immediately preceding paragraphs, wherein each recommendation action is associated with an equipment number, recommendation confidence and fix days.

The system described in the first of the four immediately preceding paragraphs, wherein the SIC factors are visually represented by bar graphs.

The system described in the first of the five immediately preceding paragraphs, wherein the fix effectiveness is based on the number of times a specific maintenance action was performed and the percentage of successful fixes for each maintenance action.

The system described in the first of the six immediately preceding paragraphs, wherein the recommendation confidence is based on the fix effectiveness, data confidence and an age factor weighted by a Gaussian distribution function.

A computer program product for aircraft fault diagnosis and maintenance recommendation, comprising: a computer-readable storage medium having program instructions embodied thereon to perform the steps of: receiving fault reports associated with at least one fault message; receiving maintenance action data associated with the fault message; determining a fix effectiveness based on the maintenance action data; computing a recommendation confidence for one or more recommendation actions based on the fix effectiveness; assigning a concurrent fault (CF) factor to the fault message based on the number of other concurrent fault messages; computing a service issue composite (SIC) factor for each of the recommendation actions using at least the recommendation confidence and the CF Factor; displaying the recommendation actions and the SIC factors in a graphical user interface; and providing the recommendation actions based on the SIC factors.

The computer program product described in the immediately preceding paragraph, wherein the recommended Actions are ranked based on the SIC Factors, with higher SIC Factor values indicating more reliable corrective actions.

The computer program product described in the first of the two immediately preceding paragraphs, further comprising instructions for computing the service issue composite (SIC) factor using a no fault found (NFF) factor, wherein the NFF factor is based on inspection results where no fault was found.

## Claims

1. A computer-implemented method (840) for aircraft fault diagnosis and maintenance recommendation, comprising:
receiving fault reports (850, 300) associated with at least one fault message.
receiving maintenance action data (852) associated with the fault message;
determining a fix effectiveness (854, 410) based on the maintenance action data;
computing a recommendation confidence (856, 508) for one or more recommendation actions based on the fix effectiveness;
assigning a concurrent fault (CF) factor (858, 610)) to the fault message based on the number of other concurrent fault messages;
computing a service issue composite (SIC) factor (860, 606) for each of the recommendation actions using at least the recommendation confidence and the CF Factor;
displaying the recommendation actions (800, 862) and the SIC factors in a graphical user interface; and
providing the recommendation actions (802) based on the SIC factors.

2. The computer-implemented method of claim 1, wherein the recommended actions (602) are ranked based on the SIC Factors, with higher SIC Factor values indicating more reliable corrective actions.

3. The computer-implemented method of any of claims 1 - 2, further comprising computing the service issue composite (SIC) factor (606) using a no fault found (NFF) factor, wherein the NFF factor is based on inspection results where no fault was found.

4. The computer-implemented method of any of claims 1 - 3, wherein each recommendation action (504) is associated with an equipment number, recommendation confidence and fix days.

5. The computer-implemented method of any of claims 1 - 4, wherein the SIC factors (606) are visually represented by bar graphs.

6. The computer-implemented method of any of claims 1 - 5, wherein the recommendation confidence (508) is visually represented by bar graphs.

7. The computer-implemented method of any of claims 1 - 6, wherein the fix effectiveness (410) is based on the number of times a specific maintenance action was performed and the percentage of successful fixes for each maintenance action.

8. The computer-implemented method of any of claims 1 - 7, wherein the recommendation confidence (508) is based on the fix effectiveness, data confidence and an age factor weighted by a Gaussian distribution function.

9. The computer-implemented method of any of claims 1 - 8, wherein the SIC factor is represented by the equation: 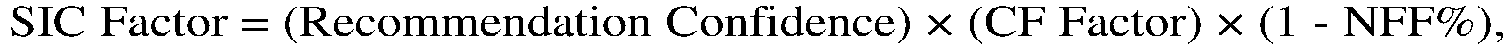 SIC Factor = (Recommendation Confidence) × (CF Factor) × (1 - NFF%), when NFF factor is considered.

10. The computer-implemented method of any of claims 1 - 9, wherein the CF Factor (610) is assigned based on the number of concurrent fault messages received with a given fault message.

11. A system (900) for aircraft fault diagnosis and maintenance recommendation, comprising:
a storage device (916) configured to store program instructions; and
one or more processors (904) operably connected to the storage device and configured to execute the program instructions to cause the system to perform operations comprising:
receive fault reports (850, 300) associated with at least one fault message;
receive maintenance action data (852) associated with the fault message;
determine a fix effectiveness (854, 410) based on the maintenance action data;
compute a recommendation confidence (856, 508) for one or more recommendation actions based on the fix effectiveness;
assign a concurrent fault (CF) factor to the fault message based on the number of other concurrent fault messages;
compute a service issue composite (SIC) factor (860, 606) for each of the recommendation actions using at least the recommendation confidence and the CF factor; and
provide the recommendation actions (802) based on the SIC factors.

12. The system of claim 11, further comprising a graphical user interface, wherein the operations further comprise: display the recommendation actions (800, 862) and the SIC factors in a graphical user interface.

13. The system of claim 11, further configured to implement a method according to any of claims 2 to 10.

14. A computer program product (922) for aircraft fault diagnosis and maintenance recommendation, comprising program instructions which, when the program is executed by one or more processors (904) of a system (900), cause the system (900) to perform a method according to any of claims 1 to 10.

15. A computer-readable storage medium (920) comprising program instructions embodied thereon which, when the program is executed by one or more processors (904) of a system (900), cause the system (900) to perform a method according to any of claims 1 to 10.
